# EUROPEAN PATENT SPECIFICATION

(11) **EP 0 485 957 B1**
(45) Date of publication and mention of the grant of the patent: **02.04.1997**
(21) Application number: 91119280.5
(22) Date of filing: 12.11.1991
(51) Int. Cl.: G03B 17/30, G03B 7/24

(54) **A photographic film cassette**
Kassette für einen photographischen Film
Cassette à film photographique

(30) Priority: 13.11.1990 JP 306533/90; 04.02.1991 JP 35732/91
(43) Date of publication of application: 20.05.1992
(73) Proprietor: Fuji Photo Film Co., Ltd., Kanagawa-ken (JP)
(72) Inventor: Takahashi, Koichi, c/o Fuji Photo Film Co., Ltd., Minami Ashigara-shi, Kanagawa-ken (JP); Kataoka, Hiroshi, c/o Fuji Photo Film Co., Ltd., Minami Ashigara-shi, Kanagawa-ken (JP); Ichikawa, Haruo, c/o Fuji Photo Film Co., Ltd., Minami Ashigara-shi, Kanagawa-ken (JP); Takatori, Tetsuya, c/o Fuji Photo Film Co., Ltd., Minami Ashigara-shi, Kanagawa-ken (JP); Naito, Toshiharu, c/o Fuji Photo Film Co., Ltd., Minami Ashigara-shi, Kanagawa-ken (JP)
(74) Representative: Grünecker, Kinkeldey, Stockmair & Schwanhäusser Anwaltssozietät

(56) References cited:
- EP-A- 0 077 972
- US-A- 4 955 555

## Description

The present invention relates to a photographic film cassette, according to the generic clauses of claims 1 and 6, and more particularly to an improvement of a photographic film cassette in which rotation of a spool causes a film leader to advance to the outside of a cassette shell.

Such a photographic film cassette is already described in document US-A-4955555 wherein a tab is used when a leader is inserted into a slot. The tab contacts the film trailer so as to guide the holes in the film to received the hooks. The tab contact the leader but does not receive the distail end of the leader.

A known film cassette includes 35 mm photographic film positioned so that the film leader does not protrude from the cassette shell prior to loading the film cassette in a camera. Such a film cassette Is easily loaded into a camera. Simple feeding mechanisms are used with this type of film cassette and include a construction which rotates the spool to unwind the photographic film, thereby causing the film leader to move through a film passage mouth and exit the film cassette, as is disclosed in USP 4,834,306 and 4,832,275.

In such a conventional film cassette, a spool is rotatably contained in a cassette shell comprised of upper and lower shell halves. On the inside surface of the cassette shell are formed a pair of annular ridges for contact with the outermost turn of the roll of film to prevent it from loosening, and a separating claw for separating a film leader of the photographic film from the roll of film to direct it to a film passage mouth for a film initial advance. Therefore, the film leader is advanced to exit the film cassette through the film passage mouth by rotating the spool in the direction to unwind the photographic film. It is noted that, instead of the annular ridges, there is a construction provided with a pair of rings rotatably mounted on the inside cylindrical surface of the cassette shell, or with a pair of circumferential ridges formed on the peripheral edges of the flanges for projecting toward the respective opposite flanges, both in order to prevent the roll of film from loosening.

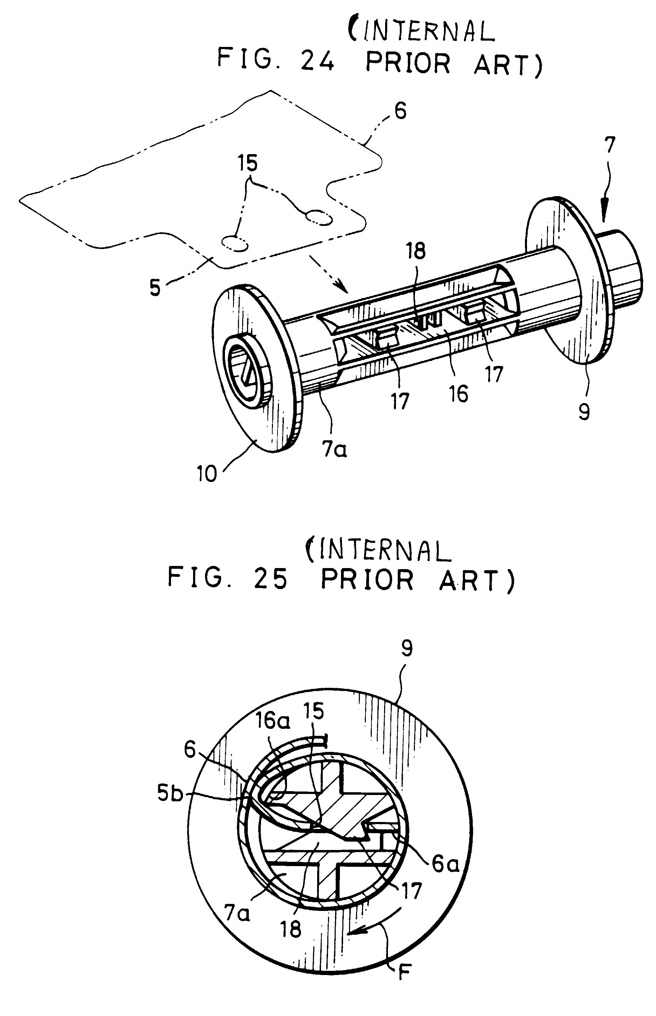

In the following, in Figures 24 to 27 there are described cassettes, which show the results of same preliminary experiments, performed internally by the Applicant.

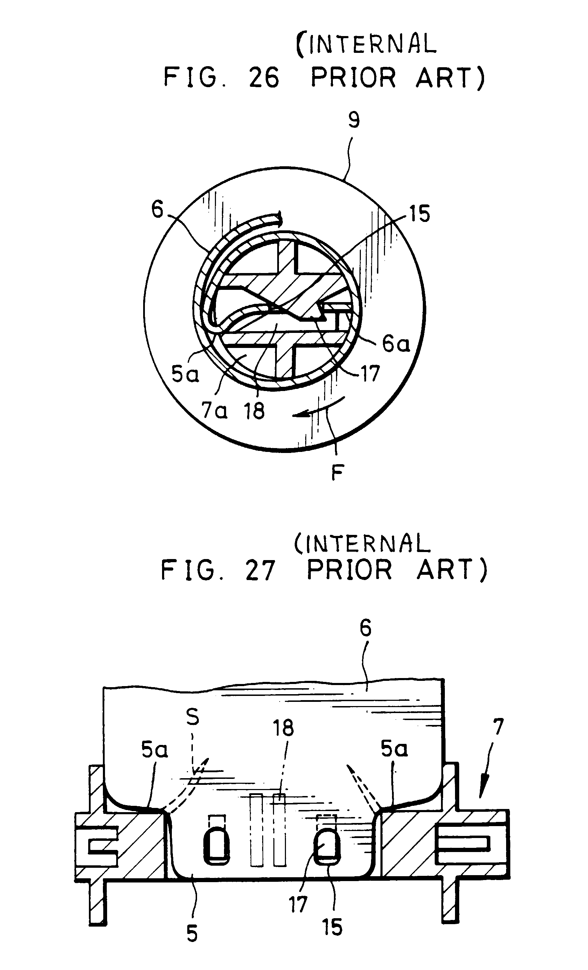

Referring to Fig. 24 illustrating a spool 7, the spool 7 of this film cassette has a construction in which a photographic film 6 is not detached from the spool 7 even by fully drawing the photographic film 6 from the cassette shell, as a film trailer 5 is reliably fixed on the spool 7. A slit 16 is formed in a spool core 7a between flanges 9 and 10 for inserting the film trailer 5. In the slit 16 are formed a pair of anchoring claws 17 and pressing projections 18. When the film trailer 5 is inserted in the slit 16, the anchoring claws 17 are engaged with a pair of holes 15 formed in the film trailer 5, so that the film trailer 5 anchored in the slit 16 and is stopped from detachment by contact with the pressing projections 18, as illustrated in Fig. 27.

When the spool 7 is rotated in the direction of winding up the photographic film 6 in a state with the trailer holes 15 anchored on the claws 17, the photographic film 6 is wound on the spool 7 with the film trailer 5 bent on an edge of the entrance 16a of the slit 16 by 90 degrees or below about the axis of the rotation in the direction opposite to winding up the photographic film 6. A portion 5b of the photographic film 6 bent on the slit entrance 16a is herein called a "film root portion". Because the film root portion 5b is so sharply bent on the spool core 7a, the innermost turn of film close to the film root portion 5b is involved with a force of restoring the initial straight form, due to the rigidity of the photographic film 6. The portion of the innermost turn close to the film root portion 5b loses contact with the spool core 7a so that the photographic film 6 is wound in a roll formed to be oval or eccentric with the spool core 7a. When the spool 7 is rotated in the film unwinding direction under this condition, the ridges 11a and 11b are in contact with an excessive friction with the outermost position corresponding to the film root portion 5b. This causes necessity of the torque larger than is enough to cause the film leader to exit. The battery in the camera loaded with this film cassette is consumed much faster than is required because a large load is applied to the motor in the camera when transporting the photographic film.

The spool 7 as illustrated in Fig. 24 is also disadvantageous in a low reliability for transmitting the rotation of the spool 7 to the roll of film 6 when rotating the spool 7 for the film initial advance, though the film trailer 5 is fixedly engaged on the spool core 7a. When the film leader is actually propelled through the film passage mouth by rotating the spool, the plush applies a load to the film leader in passage because the film leader is forced to advance between and against the upper and lower plush pieces. The load as applied to the film leader is transmitted to the construction of anchoring the film trailer on the spool via the roll of film. Even though the spool 7 is rotated in the direction to unwind the photographic film 6 as indicated by the arrow F in Fig. 26, the load on the film leader 6a causes the film trailer 5 to move from the position of the anchor on the spool 7 toward the exit of the slit 16. Shoulder portions 5a, defined on the lateral sides of the film trailer by reducing the width of the photographic film 6, are abutted on the spool core 7a as illustrated in Figs. 26 and 27. Further rotation of the spool 7 in the direction F causes the film trailer 5 to flex like a letter U reverse to the direction of convolutions of the roll of film 6. The shoulder portions 5a are subjected to a large pressure by contact with the entrance of the slit 16. Crack S indicated by the broken line might take place on the shoulder portions 5a. There might be a case in which the trailing end portion is cut off when the applied pressure is high.

It is therefore an object of the present invention to provide a photographic film cassette in which the photographic film is prevented from being wound in an irregular roll.

It is another object of the present invention to provide a photographic film cassette in which the rotary force caused by rotation of a spool in the film unwinding direction can be reliably transmitted to a film trailer.

This object is met by the characterizing features of claims 1 and 6.

The above objects and advantages of the present invention will become more apparent from the following detailed description when read in connection with the accompanying drawings, in which:
Fig. 1 is an exploded perspective view illustrating a photographic film cassette not according to the present invention;
Fig. 2 is a cross section illustrating the film cassette;
Fig. 3 is a perspective view illustrating a state where a photographic film is taken from a cassette shell;
Fig. 4 is a cross section illustrating an important portion of the film cassette in a state where a film trailer is released from an anchor on a spool;
Fig. 5 is an exploded perspective view illustrating a film cassette not according to an embodiment of the present invention;
Fig. 6 is a cross section Illustrating an important portion of the film cassette in a state where the film trailer is inserted in a slit;
Fig. 7 is a cross section illustrating a state where the film trailer is anchored on a spool;
Fig. 8 is a front view illustrating an internal spool piece of a film cassette not according to an embodiment of the present invention;
Fig. 9 is a right side view illustrating the internal spool piece;
Fig. 10 is a cross section illustrating the internal spool piece, taken on Line A-A in Fig. 8;
Fig. 11 is a front view illustrating an external spool piece for receiving the internal spool piece;
Fig. 12 is a cross section illustrating a state where the film trailer is anchored on a spool;
Fig. 13 is an exploded perspective view illustrating a film cassette not according to a preferred embodiment of the present invention;
Fig. 14 is a cross section illustrating a state where the film trailer is anchored on a spool;
Fig. 15 is an exploded perspective view illustrating a film cassette not according to an embodiment of the present invention;
Fig. 16 is a cross section illustrating an important portion of a spool of the film cassette;
Fig. 17 is an exploded perspective view illustrating a film cassette according to a preferred embodiment in which an abutting member is provided on a core of a spool;
Fig. 18 is a vertical section illustrating the spool;
Fig. 19 is a cross section illustrating the spool, taken on Line X-X in Fig. 17;
Fig. 20 is a vertical section illustrating a spool according to another preferred embodiment of the present invention;
Fig. 21 is a cross section illustrating the spool, taken on Line Y-Y in Fig. 20;
Fig. 22 is a vertical section illustrating a spool according to a further preferred embodiment of the present invention;
Fig. 23 is a cross section illustrating the spool, taken on Line Z-Z in Fig. 22;
Fig. 24 is a perspective view illustrating a spool of a conventional film cassette;
Fig. 25 is a cross section illustrating the spool in a state where a film root portion is sharply bent;
Fig. 26 is a cross section illustrating the spool at the time of rotation in the film unwinding direction; and
Fig. 27 is a vertical section illustrating the spool.

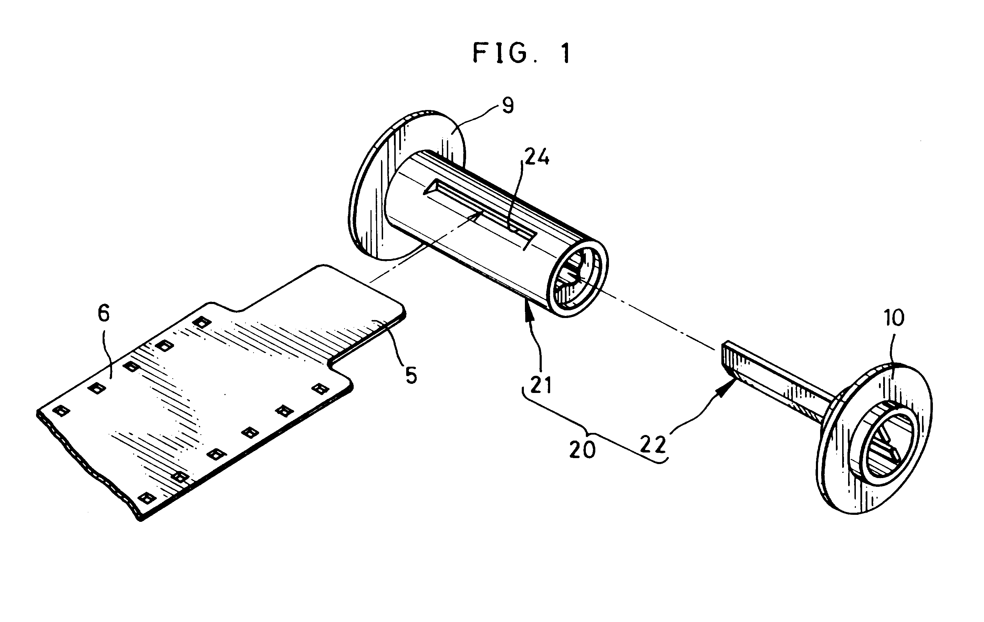

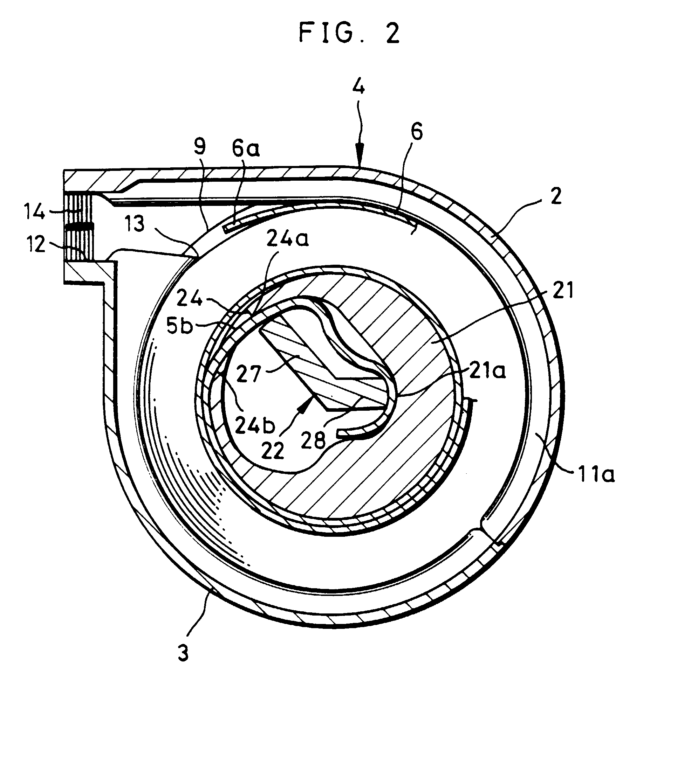

A photographic film cassette is described with reference to Figs. 1 to 4. Elements similar to those of the conventional film cassette described as prior art are designated with identical reference numerals. A spool 20 is comprised of an external spool piece 21 and an internal spool piece 22, which are rotatably supported in a cassette shell 4 comprised of upper and lower shell halves 2 and 3. Both flanges 9 and 10 are formed on the respective spool pieces 21 and 22 integrally therewith. The external spool piece 21 about which the photographic film 6 is wound is in the tubular shape, or cylindrical and hollow. A slit 24 is formed on the external spool piece 21 for inserting a film trailer 5 therein. As is illustrated in Fig. 2, a pressing edge 24a is formed on an edge of the slit 24 for pressing a film root portion 5b of the photographic film 6 toward the axis of the spool 20. An edge of the slit 24 opposite to the pressing edge 24a is a sloped edge 24b for keeping the film root portion 5b curving smoothly in contact with the surface of the external spool piece 21 while the film root portion 5b is pressed by the pressing edge 24a.

The shaft portion of the internal spool piece 22 is comprised of a wide blade 27 and a narrow blade 28 formed together in the shape of a letter V. The internal spool piece 22 is inserted in the external spool piece 21 in the axial direction. The film trailer 5 is fixedly held between an inside surface 21a of the external spool piece 21 and a lengthwise edge of the narrow blade 28 by rotating the internal spool piece 22 in the film wind-up direction relative to the external spool piece 21. A reference numeral 29 designates engaging portions formed on the ends of the respective spool pieces 21 and 22 for being engaged when the spool pieces 21 and 22 are rotated. A reference numeral 6a designates a film leader. A pair of ridges 11a and 11b are formed on the inside surface of the cassette shell 4 for contact with the outermost turn of the roll of film 6 to prevent it from loosening. A reference numeral 12 designates a film passage mouth. A separating claw 13 separates the film leader 6a from the roll of film 6 to direct it to the film passage mouth for a film initial advance. A plush or light-trapping fabric 14 is attached to the inner surfaces inside the film passage mouth 12 for preventing light from entering the cassette shell 4 through the film passage mouth 12.

The operation of the above construction is described now in detail. To anchor the film trailer 5 on the spool 20, the film trailer 5 is inserted in the slit 24 before the internal spool piece 22 is inserted in the external spool piece 21. The inserted internal spool piece 22 is rotated in the film wind-up direction while the external spool piece 21 is rotated in the opposite, film unwinding direction, so that the inside surface 21a and the narrow blade 28 nip fixedly the film trailer 5 in cooperation. Observed in the cross section, the inside surface 21a is in the shape gradually projecting toward the center of the spool 20 in the film wind-up direction from the nipping position of the narrow blade 28. When the film trailer 5 is nipped, the spool pieces 21 and 22 are securely locked together, unless the internal spool piece 22 is relatively rotated about the axis of the spool 20.

Both spool pieces 21 and 22 are then rotated together in the film wind-up direction so as to wind the photographic film 6 on the outside of the external spool piece 21. The photographic film 6 is wound in a regularly cylindrical roll concentric with the spool 20, due to the pressing edge 24a pressing the film root portion 5b toward the axis of the spool 20, and to the sloped edge 24b preventing the film root portion 5b from being bent sharply.

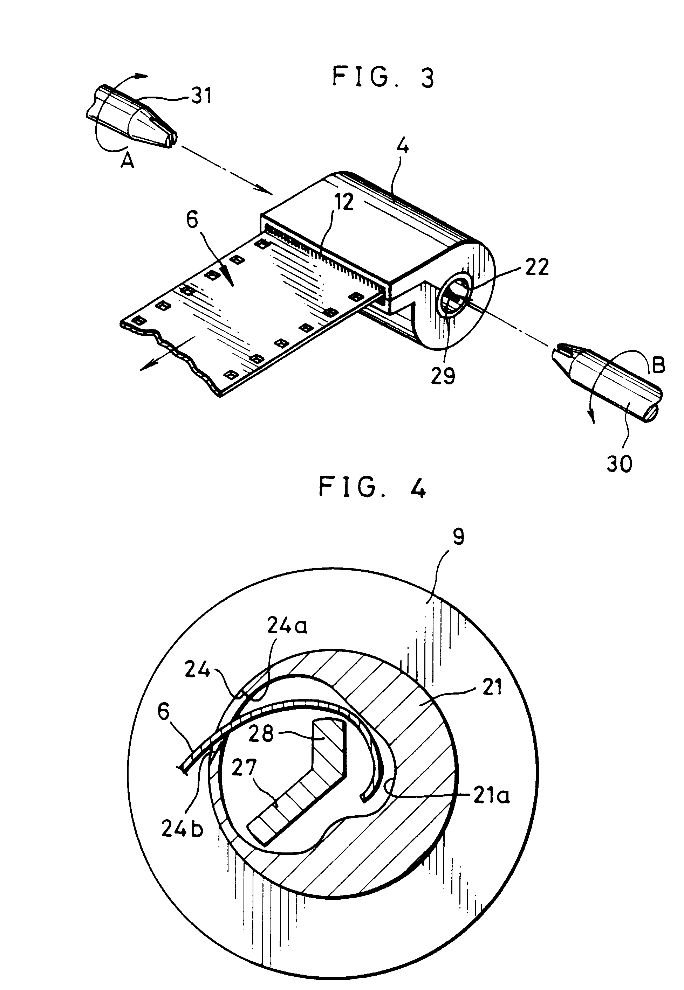

To release the film trailer 5 from the anchor on the spool 20, the engaging portions 29 exposed to the outside of both end faces of the cassette shell 4 are engaged with jigs 30 and 31 as illustrated in Fig. 3. The jig 31 is rotated in the direction of the arrow A while the jig 30 is rotated in the opposite direction indicated by the arrow B, so that the internal spool piece 22 is rotated in the film unwinding direction relative to the external spool piece 21. The narrow blade 28 is unlocked from the inside surface 21a to set free the film trailer 5 as illustrated in Fig. 4. The photographic film 6 then can be smoothly detached out and removed from the cassette shell 4.

Although the photographic film 6 in the conventional film cassette was drawn out and cut off near the film passage mouth 12 as it was impossible to detach the film trailer 5 from the spool 7 without disassembling the cassette shell 4, yet the shown film cassette requires no such laborious operation, so that the efficiency in the film developing process is improved.

When the photographic film 6 of the conventional film cassette was drawn out by using an automatic film processor, the film trailer 5 and the anchoring construction of the spool 7 were subjected to a large force of impact which might cause a damage of the photographic film 6. It is, however, possible by use of the described cassette to take out the photographic film 6 without a film damage because the anchor is beforehand undone between the film trailer 5 and the spool 20.

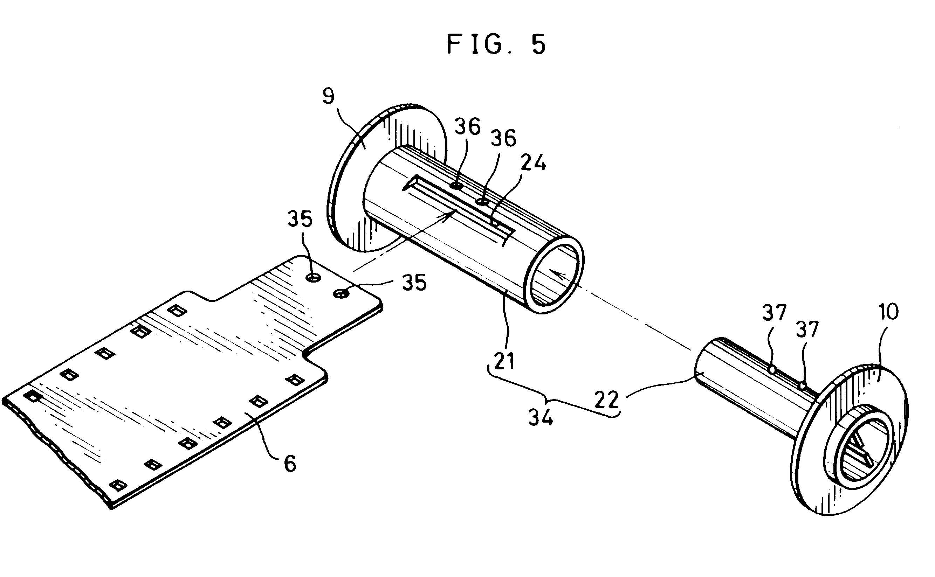

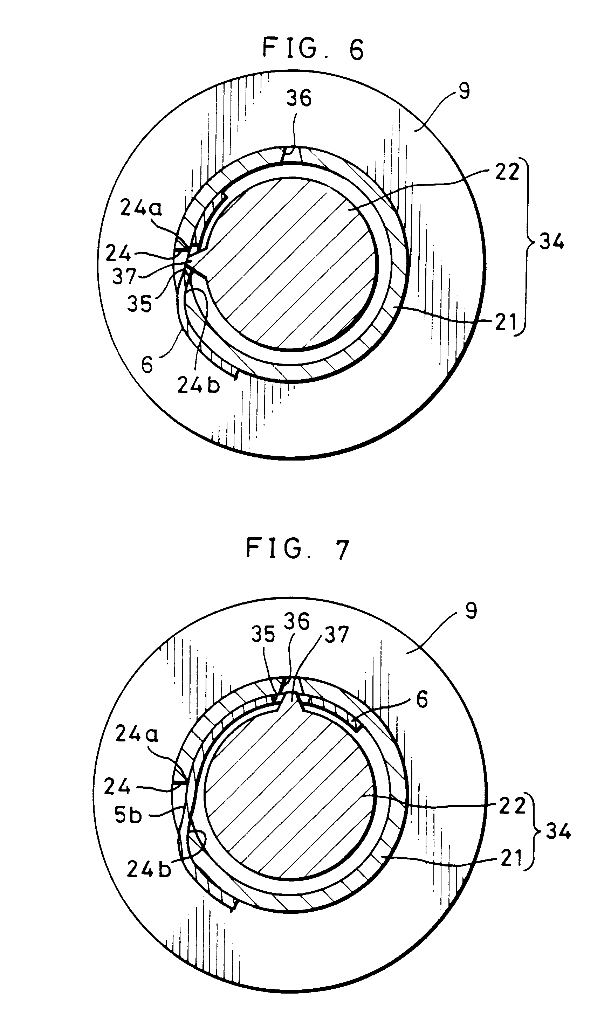

Another preferred embodiment according to the present invention is described referring to Figs. 5 and 7. Like the former cassette, a spool 34 is comprised of the external and internal spool pieces 21 and 22, and rotatably supported in the cassette shell 4. A difference lies in a construction in which two holes 35 formed in the film trailer 5 are anchored by two projections 37 formed on the internal spool piece 22 with two holes 36 formed on the external spool piece 21.

The operation of this film cassette is described. The film trailer 5 is inserted in the slit 24 of the external spool piece 21 until the trailer holes 35 are positioned in or slightly behind the slit 24. The internal spool piece 22 is inserted in the external spool piece 21 so that, as illustrated in Fig. 6, the trailer hoes 35 are engaged with the projections 37 which are tapered outward.

The internal spool piece 22 is rotated in the film wind-up direction while the external spool piece 21 is rotated reverse in the film unwinding direction, until the projections 37 are fitted in the holes 36 in keeping the trailer holes 35 on the projections 37. The rotation is smoothly performed due to the tapered shape of the projections 37. The holes 36 anchor the projections 37 and take a state as illustrated in Fig. 7.

Both spool pieces 21 and 22 are rotated together in the film wind-up direction so as to wind the photographic film 6 on the outside of the external spool piece 21. The photographic film 6 is wound in a regularly cylindrical roll concentric with the spool 34, due to the pressing edge 24a and the sloped edge 24b constructed in the manner the same as the former cassette.

To disengage the film trailer 5 from the spool 34, the internal spool piece 22 Is rotated in the film unwinding direction while rotating the external spool piece 21 in the film wind-up direction by use of the jigs the same as those in use for the former cassette, until the spool pieces 21 and 22 take the state of Fig. 6. The photographic film 6 is drawn to remove the film trailer 5 from the projections 37 with ease due to the tapered surface of the projections 37.

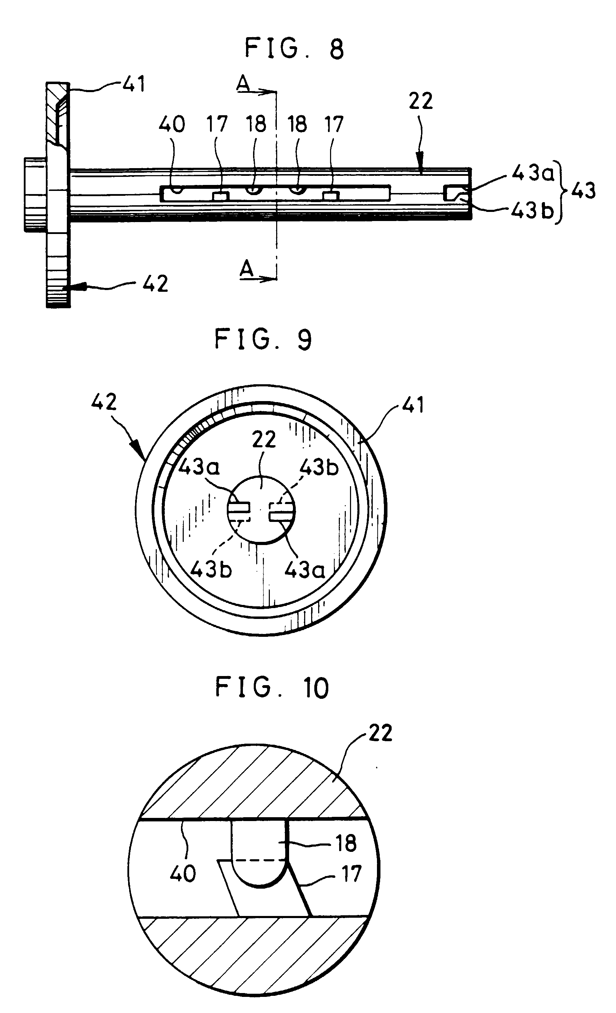

A further cassette is described referring to Figs. 8 to 12. Like the former cassettes, a spool 39 is comprised of the external and internal spool pieces 21 and 22, and rotatably supported in the cassette shell 4. A difference lies in an anchoring construction formed in the internal spool piece 22 for anchoring the film trailer 5 on the spool 39.

As is illustrated in Figs. 8 and 10, the internal spool piece 22 is provided with an inner slit 40 having a length a little larger than the width of the film trailer 5 and penetrating through the internal spool piece 22 along its diameter. In the inner slit 40 are formed the pair of anchoring claws 17 and the pressing projections 18. When the film trailer 5 is inserted in the slit 16, the anchoring claws 17 are engaged with the trailer holes 15, so that the film trailer 5 anchored in the slit 16 and is stopped from detachment by contact with the pressing projections 18.

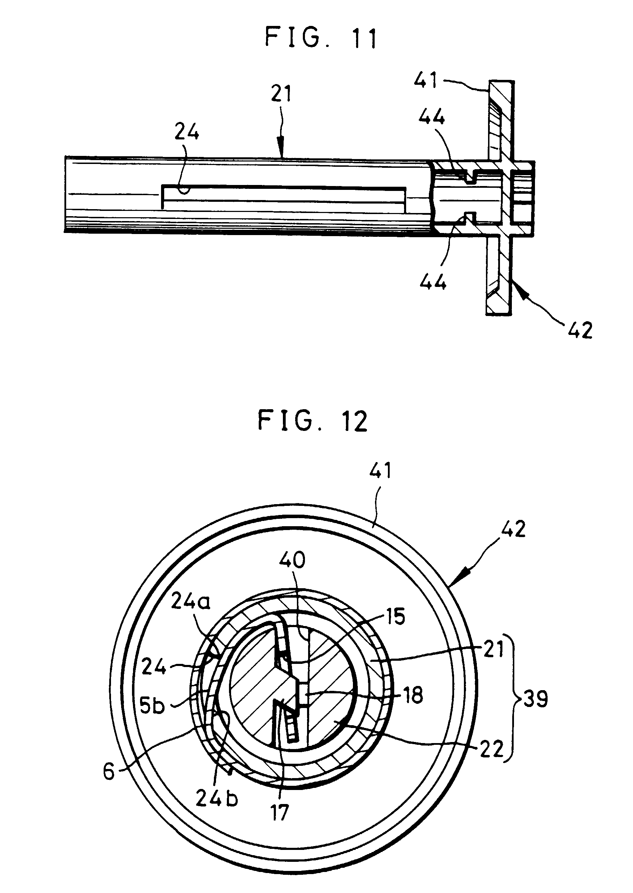

The slit 24 formed on the external spool piece 21 has a length substantially equal to that of the inner slit 40. Flanges 42 formed respectively on the spool pieces 21 and 22 are provided with circumferential ridges 41 projecting toward the respective opposite flanges 42 for allowing contact with the outermost turn of the photographic film 6 wholly wound in a roll about the spool 39. Two cam recesses 43 are formed on the end of the shaft portion of the internal spool piece 22, and consist respectively of a straight groove 43a and a widened spacing 43b. Projections 44 are formed on the inside surface of the external spool piece 21 to be 90 degrees deviated from the slit 24 as illustrated in Fig. 11, and inserted each in the straight groove 43a when the spool pieces 21 and 22 are fitted together. The shaft portion of the external spool piece 21 is formed to be a little shorter than the width of the photographic film 6. It is noted that a circumferential ridge may be formed only one of the two flanges 42.

The operation of this film cassette is described now. The internal spool piece 22 is inserted in the external spool piece 21 so as to fit the inner slit 40 on the slit 24. The advancing end of the internal spool piece 22 is brought in contact with the projections 44. The film trailer 5 is inserted in the inner slit 40 through the slit 24. Even when the advancing end of the internal spool piece 22 does not reach the innermost position of the inside surface of the external spool piece 21, the film trailer 5 can be smoothly inserted in the slit 24 and the inner slit 40 which are formed longer than the width of the film trailer 5.

When the claws 17 are engaged with the trailer holes 15, the film trailer 5 is anchored on the internal spool piece 22. The internal spool piece 22 is rotated in the film wind-up direction while rotating the external spool piece 21 in the opposite direction, until the projections 44 are engaged each with the straight groove 43a. Then both spool pieces 21 and 22 are rotated together in the film wind-up direction so as to wind the photographic film 6 on the outside of the external spool piece 21. The photographic film 6 is wound in a regularly cylindrical roll concentric with the spool 39, due to the pressing edge 24a and the sloped edge 24b constructed in the manner the same as the former cassettes, until taking a state as illustrated in Fig. 12.

In the present film cassette, the shaft portion of the external spool piece 21 is shorter than the width of the photographic film 6. When the internal spool piece 22 is rotated in the direction of propelling the film leader to the outside of the cassette shell 4, the projections 44 move each from the straight groove 43a to the cam groove 43b. The two spool pieces 21 and 22 are further slid to come close to the photographic film 6. The photographic film 6 wound about the spool 39 is clamped between the flanges 42 with their interval decreased, and prevented from loosening. The film leader 6a of the photographic film 6 is advanced to the outside of the cassette shell by use thereof.

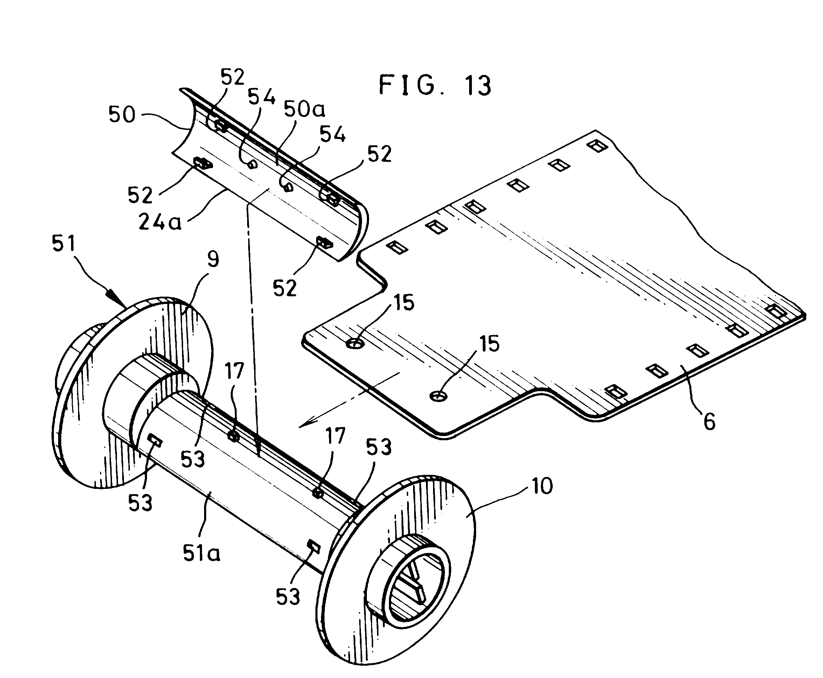

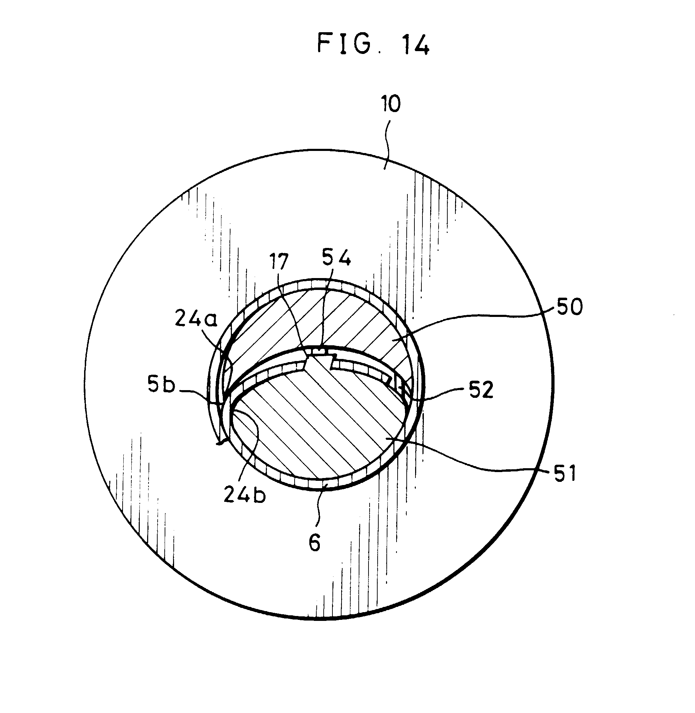

Yet another cassette is described with reference to Figs. 13 and 14. A detachable clamping member 50 is to be fitted on a spool 51 in a recess 51a formed along the axial direction. Four anchoring holes 53 and the projections or claws 17 are formed integrally with the spool 51 in the recess 51a formed parallel to the axis, which claws 17 are to anchor the trailer holes 15. On the clamping member 50 are formed anchoring claws 52 for being engaged with the anchoring holes 53 and pressing projections 54 for pressing the film trailer 5 against the recess 51a when joining the clamping member 50 on to the spool 51. A lateral edge of the anchoring member 50 on the side of passing the film trailer 5 constitutes the pressing edge 24a for pressing the film root portion 5b toward the axis of the spool 51 by joining the spool 51 and the clamping member 50. An edge of the recess 51a facing on the pressing edge 24a constitutes the sloped edge 24b for keeping the film root portion 5b curved smoothly in contact with the surface of the spool 51 while the film root portion 5b is pressed by the pressing edge 24a.

The operation of such a film cassette is described in detail. To anchor the film trailer 5 on the spool 51, the anchoring holes 15 is fitted on the claws 17 of the spool 51. The anchoring claws 52 of the clamping member 50 are engaged with the anchoring holes 53 of the spool 51, so as to join the clamping member 50 on to the spool 51.

The spool 51 is then rotated in the film wind-up direction to wind the photographic film 6 about the core of the spool 51. The photographic film 6 is appropriately wound, due to the pressing edge 24a and the sloped edge 24b constructed in the manner the same as the former embodiments, until taking a state as illustrated in Fig. 14.

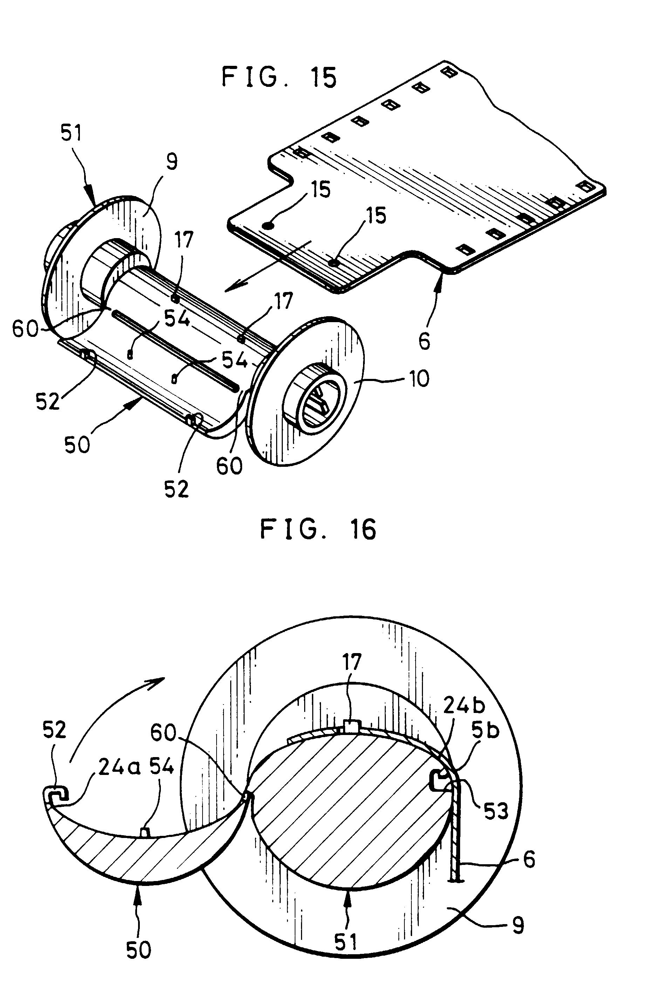

A still further cassette is briefly described referring to Figs. 15 and 16. The clamping portion 50 as described in the former embodiment is formed integrally with the spool 51. The molded joint between the clamping member 50 and the spool 51 is two joint portions 60 of a small thickness formed on both ends of the lateral side opposite to the pressing edge 24a. The joint portions 60 are flexible to allow the clamping member 50 to flat, between which a narrow opening is formed.

In a film cassette in which rotation of the spool propels the film leader to the outside of the cassette shell, the resistance during an advance against the plush in the film passage mouth is transmitted to the film trailer, but might cause a reverse flexure of the film trailer. With a pressure applied to the film trailer from the spool core, the film trailer might be torn in the shoulder portions beside the trailing end portion.

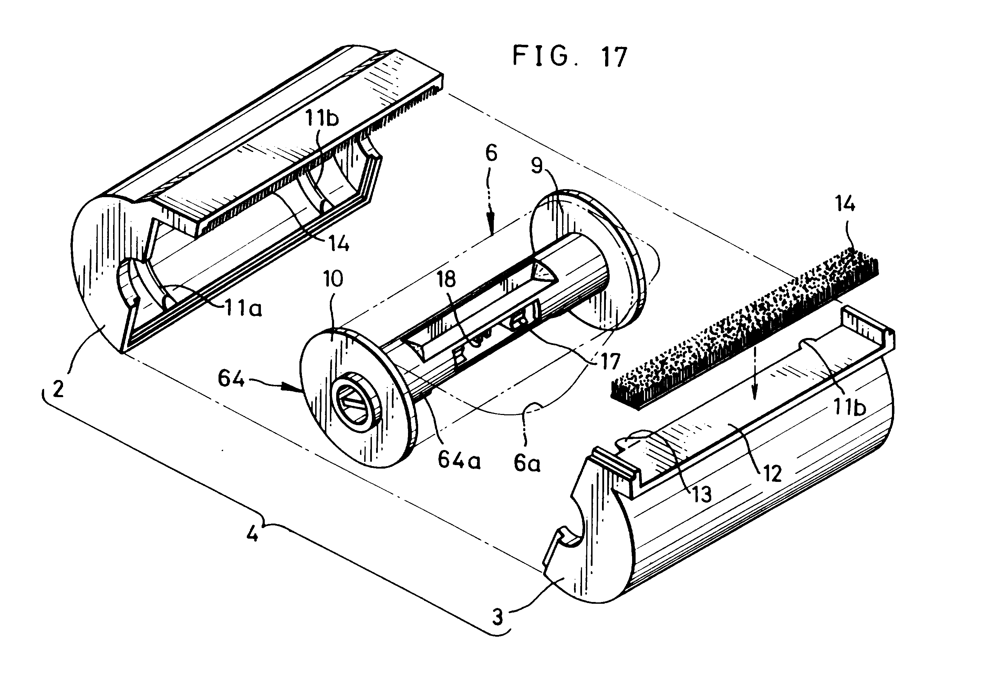

Fig. 17 illustrates an embodiment of the film cassette for preventing the film trailer from being damaged. In the film cassette, the photographic film 6 is wound in a roll about a spool 64 on a spool core 64a. Elements similar to those in the former embodiments are designated with the identical reference numerals.

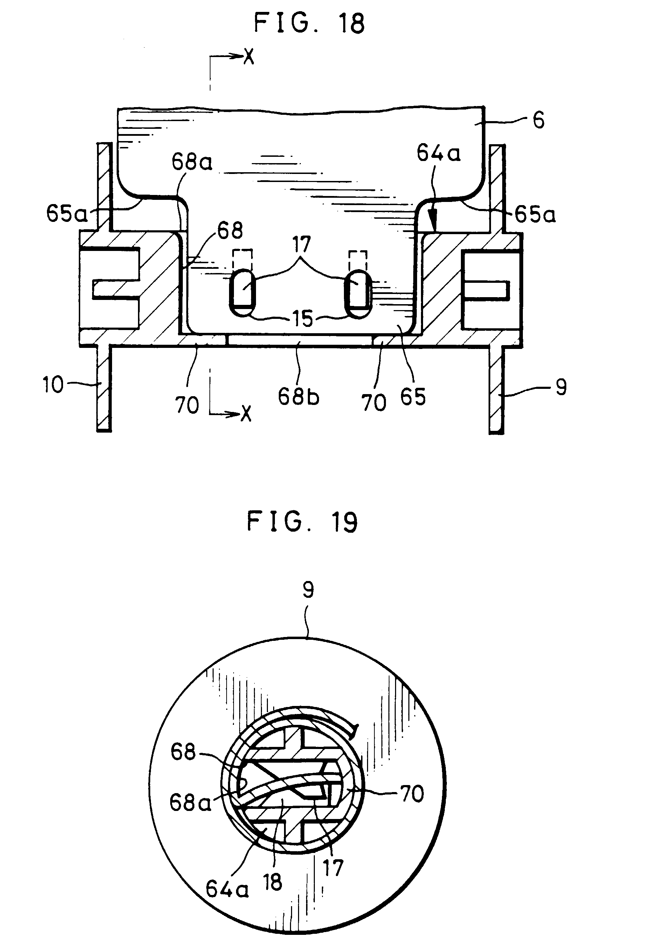

Referring to Figs. 18 and 19, a slit 68 is formed in the spool core 64a. A film trailer 65 is inserted in the slit 68 through an entrance 68a of the slit 68. The end portion as inserted of the film trailer 65 has a smaller width. On an exit 68b of the slit 68 are formed abutting walls 70 for contact with the trailing end of the film trailer 65 in order to prevent the film trailer 65 from moving.

The anchoring claws 17 are formed in the slit 68 to anchor the trailer holes 15 formed in the film trailer 65. The pressing projections 18 are also formed in the slit 68 for pressing the film trailer 65 in order to prevent the trailer holes 15 from being detached from the claws 17. The trailing end portion having the smaller width on the film trailer 65 has a length larger than the diameter of the spool core 64a. As is illustrated in Fig. 18, shoulder portions 65a defined adjacent to the trailing end portion are kept in no contact with the spool core 64a under a condition where the trailer holes 15 are anchored on the claws 17.

The operation of this film cassette is now described. When the spool 64 is rotated in the film unwinding direction (clockwise in Fig. 17) in a completely unused state, the film leader 6a is propelled to the film passage mouth 12. When the film leader 6a is propelled and reaches the plush 14, the resistance of the plush 14 to the advance of the photographic film 6 becomes larger, and is transmitted up to the film trailer 65. The film trailer 65 would be retracted toward the outside of the slit exit 68b, or in the downward direction in Fig. 18. However, the film trailer 65 is prevented from being retracted by the abutting walls 70 so that the shoulder portions 65a are never pressed against the spool core 64a beside the slit entrance 68a. Further rotation of the spool 64 against this resistance transmits the rotary force of the spool 64 to the photographic film 6 with the film trailer 65 fixedly positioned by the abutting walls 70. The film leader 6a can be advanced through the film passage mouth 12 even against the resistance of the plush 14.

Even when the film trailer 65 is reverse flexed at the entrance 68a of the slit 68 by rotating the spool 64 as illustrated in Fig. 19, no crack takes place on the shoulder portions 65a because one lateral edge of the slit entrance 68a receives the film trailer 65 widthwise.

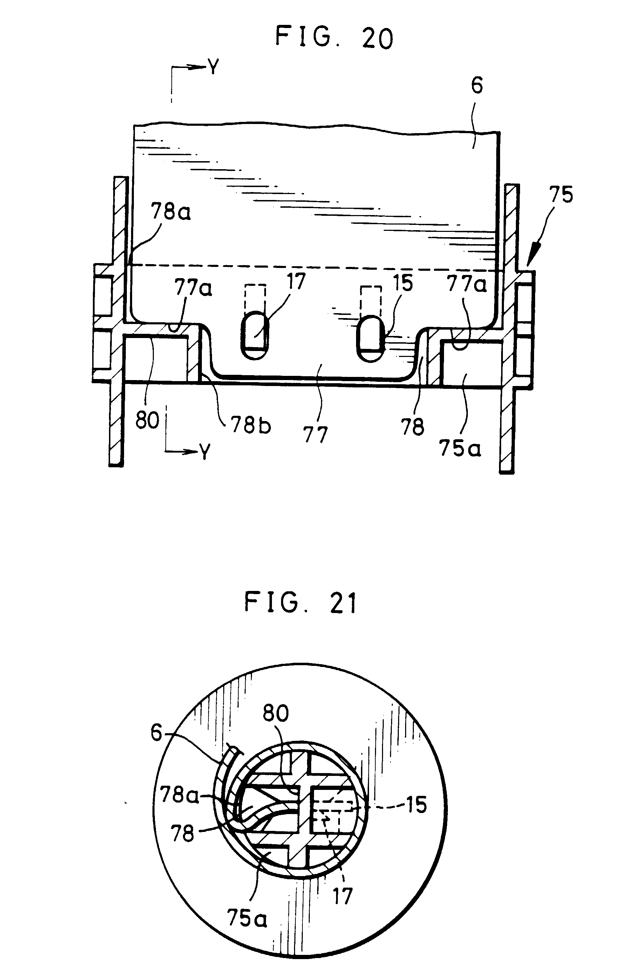

Referring to Figs. 20 and 21 illustrating another preferred embodiment of the present invention, a slit 78 is formed on a core 75a of a spool 75 for inserting a film trailer 77 of the photographic film 6. The anchoring claws 17 and the pressing projections 18 are formed in the slit 78, in a manner the same as the former embodiments, for anchoring the holes 15 of the film trailer 77. A pair of shoulder portions 77a are formed to form the trailing end portion to be narrow, so that the shoulder portions 77a are located nearly on the axis of the spool core 75a.

An entrance 78a of the slit 78 has a length enough for receiving the full width of the photographic film 6, whereas an exit 78b of the slit 78 has a length for being fitted on the trailing end portion of the film trailer 77. Abutting walls 80 are formed substantially at the middle of the slit 78 to reduce the length of the slit 78 toward the slit exit 78b. The abutting walls 80 are in contact with the shoulder portions 77a to prevent them from being moved downward in Fig. 20. The rotation of the spool 75 is transmitted to the photographic film 6 via the shoulder portions 77a.

When the spool 75 is rotated in the film unwinding direction, little reverse flexure takes place on the shoulder portions 77a as positioned inside the slit 78, even with the force applied in the film retracting direction. The photographic film is held on the full width. Therefore no irregular force will be applied to the shoulder portions 77a. No crack takes place on the shoulder portions 77a.

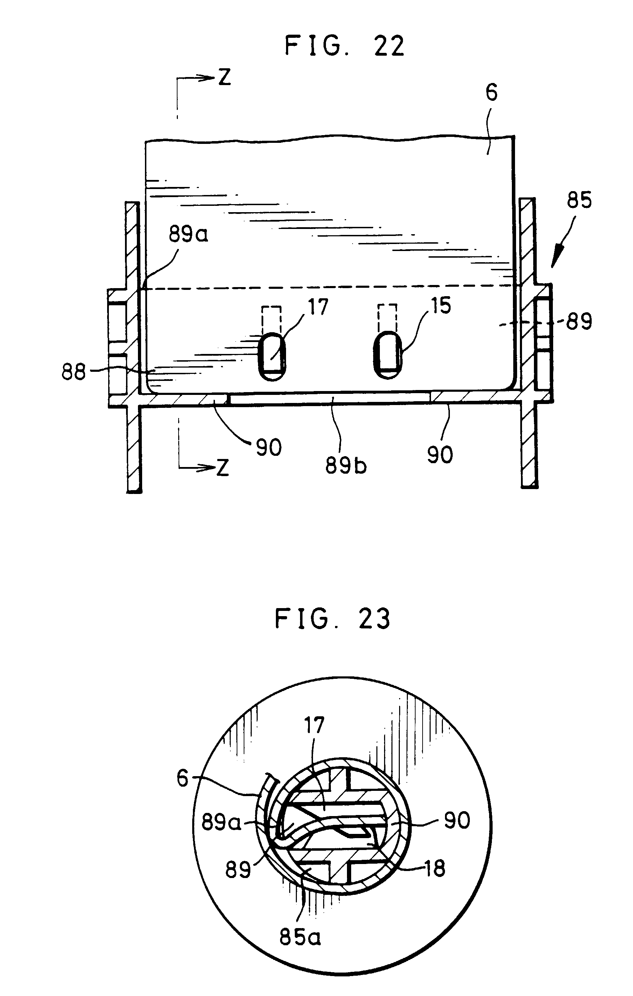

Referring to Figs. 22 and 23 illustrating a further preferred embodiment of the film cassette, a slit 89 is formed in a core 85a of a spool 85 for inserting a film trailer 88 of the photographic film 6. The anchoring claws 17 and the pressing projections 18 are formed in the slit 89 in cooperation for anchoring the trailer holes 15. The film trailer 88 has the constant width of the photographic film 6.

An entrance 89b of the slit 89 has a length the same as the width of the photographic film 6. Abutting walls 90 are formed on both sides of an exit 89b of the slit 89. The abutting walls 90 are in contact with the trailing end of the film trailer 88 so as to stop the film trailer 88 from moving downward in Fig. 22. The rotary force of rotating the spool 85 is transmitted to the photographic film 6 via the film trailer 88.

When the spool 85 is rotated in the film unwinding direction, the trailing end of the film trailer 88 is held on the full width even with the force applied in the film retracting direction. Therefore no irregular force will be applied to the film trailer 88. No crack takes place on the film trailer 88.

It is noted that, in the above embodiments, the abutting walls 70, 80, and 90 are similar in a construction in which the location within the slit consists in the range from the slit entrance to the slit exit but exclusive of the verge of the slit entrance.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A photographic film cassette in which a spool (64,85) with photographic film (6) wound thereon is rotatably contained in a cassette shell (4), comprising:
a slit (68,89) formed in the core of said spool (64,85) to extend in the direction of the axis of said spool core for inserting the film trailer (65,88) of said photographic film;
anchoring means (17) disposed on an inside surface of said slit (68,89) for anchoring said film trailer (65);
**characterized by**
abutting means (70,90) positioned on said inside surface of said slit for abutting against an end edge of said film trailer (65,88);
wherein said abutting means (70,90) is arranged such that when said spool (64) is rotated in the unwinding direction, a rotary force is transmitted to said photographic film (6), so that rotation of said spool (64,85) propels the film leader to the outside of said cassette shell.

2. A photographic film cassette as claimed in claim 1, further comprising:
at least one anchoring hole (15) formed on said film trailer;
at least one anchoring claw (17) formed to project from said inside surface of said slit (68,69) for being fitted in said anchoring hole; and
at least one pressing projection (18) formed on said inside surface of said slit to project in a direction opposite to said anchoring claw for preventing said anchoring hole from slipping off said anchoring claw.

3. A photographic film cassette as claimed in claim 2, wherein:
said slit (68,89) penetrates through said spool core from the slit entrance (68a) for receiving said film trailer (65,88) to the slit exit (68b) opposite to said slit entrance; and
said abutting means (70,90) being formed in a position retracted from said slit entrance.

4. A photographic film cassette as claimed in claim 3, wherein said abutting means (70,90) is formed so as to close a portion of said slit exit (68b).

5. A photographic film cassette as claimed in claim 3, wherein said abutting means (70,90) is a pair of abutting members formed between said slit entrance (68a) and said slit exit (68b), and extending from both lateral ends of said slit to a lengthwise middle of said slit so as to receive shoulder portions (65a) which define recesses formed on said film trailer.

6. A photographic film cassette, wherein a spool (75) with a photographic film (6) wound thereon, is rotatably contained in a cassette shell (4), said cassette comprising:
a spool core (75a) having a slit (78) formed therein for receiving a film trailer portion (77) of said photographic film, said trailer portion having a narrowed portion which defines two lateral shoulder portions (77a) of said trailer portion;
anchoring means (17) disposed on an inside surface of said slit (78) for anchoring said film trailer portion (77);
**characterized by**
a pair of abutment portions (80) having abutment surfaces, disposed on said inside surface of said slit (78) and extending from lateral edges of said slit to define a recess in said slit, the width of said recess corresponding substantially to the width of said narrowed portion; and
said lateral shoulder portions (77a) of said film abutting against respective ones of said abutment surfaces when said trailer portion is received in said slit,
wherein said abutment portions (80) are arranged such that when said spool (75) is rotated in the unwinding direction, a rotary force is transmitted to said photographic film (5), so that said rotation of said spool propels a film leader to an outside of said cassette shell.

7. A photographic film cassette as claimed in claim 6, wherein said anchoring means (17) further comprises:
at least one anchoring projection (17) formed on a first inside surface of said slit (78) to engage with an anchoring hole formed in said trailer portion; and
at least one pressing projection (18) formed on said second inside surface of said slit and projecting towards said first inside surface to prevent said anchoring projection from disengaging from the anchoring hole.

## Patentansprüche

1. Fotografische Filmkassette, in der eine Spule (64, 85), um die ein fotografischer Film (6) gewickelt ist, drehbar in einem Kassettengehäuse (4) enthalten ist, umfassend:
einen Schlitz (68, 89), der in dem Spulenkern (64, 85) ausgebildet ist und sich in Axialrichtung des Spulenkerns erstreckt, um einen Filmendstreifen (65, 68) des fotografischen Films einzuführen;
eine Verankerung (17), die auf einer Innenfläche des Schlitzes (68, 89) angebracht ist, um den Filmendstreifen (65) zu verankern;
gekennzeichnet durch
eine Anschlageinrichtung (70, 90), die an der Innenfläche des Schlitzes positioniert ist, um gegen eine Endkante des Filmendstreifens (65, 88) zu stoßen;
wobei die Anschlageinrichtung (70, 90) so angeordnet ist, daß, wenn die Spule (64) in Abspulrichtung gedreht wird, eine Rotationskraft auf den fotografischen Film (6) übertragen wird, so daß die Drehung der Spule (64, 85) den Filmanfang aus dem Kassettengehäuse (4) schiebt.

2. Fotografische Filmkassette nach Anspruch 1, wobei weiter
zumindest ein Verankerungsloch (15) in dem Filmendstreifen ausgebildet ist;
zumindest ein Verankerungsgreifer (17) ausgebildet ist, der von der Innenfläche des Schlitzes (68, 69) vorsteht, um in das Verankerungsloch eingepaßt zu werden; und
zumindest ein Preßvorsprung (18) auf der Innenfläche des Schlitzes ausgebildet ist, der sich in einer zu dem Verankerungsgreifer entgegengesetzten Richtung erstreckt, um zu verhindern, daß das Verankerungsloch von dem Verankerungsgreifer rutscht.

3. Fotografische Filmkassette nach Anspruch 2, wobei
der Schlitz (68, 89) durch den Spulenkern von dem Schlitzeingang (68a) zum Empfangen des Filmendstreifens (65, 88) zum Schlitzausgang (68b) auf der anderen Seite vom Schlitzeingang, durchgeht, und
die Anschlageinrichtung (70, 90) in einer von dem Schlitzeingang zurückversetzten Lage ausgebildet ist.

4. Fotografische Filmkassette nach Anspruch 3, wobei die Anschlageinrichtung (70, 90) so ausgebildet ist, daß sie einen Teil des Schlitzausgangs (68b) verschließt.

5. Fotografische Filmkassette nach Anspruch 3, wobei die Anschlageinrichtung (70, 90) aus einem Paar Anschlagteilen besteht, die zwischen dem Schlitzeingang (68a) und dem Schlitzausgang (68b) ausgebildet sind, und sich von beiden lateralen Enden des Schlitzes längs zur Mitte des Schlitzes erstrecken, so daß sie Schulterbereiche (65a) aufnehmen, die Aussparungen definieren, die in dem Filmendstreifen gebildet sind.

6. Fotografische Filmkassette, wobei eine Spule (75), um die ein fotografischer Film (6) gewickelt ist, drehbar in einem Kassettengehäuse (4) enthalten ist, wobei die Kassette umfaßt:
einen Spulenkern (75a) in dem ein Schlitz (78) geformt ist, um einen Filmendstreifenbereich (77) des fotografischen Films aufzunehmen, wobei der Filmendstreifenbereich einen schmaleren Bereich aufweist, der zwei laterale Schulterbereiche (77a) des Filmendstreifenbereiches bestimmt;
eine Verankerung (17), die an der Innenfläche des Schlitzes (78) angeordnet ist, um den Filmendstreifenbereich (77) zu verankern;
**gekennzeichnet durch**
ein Paar Anschlagbereiche (80) mit Anschlagflächen, die an der Innenfläche des Schlitzes (78) angebracht sind und sich von lateralen Kanten des Schlitzes erstrecken, um eine Ausnehmung in dem Schlitz zu definieren, wobei die Breite der Ausnehmung im wesentlichen der Breite des schmalen Bereiches entspricht und
die lateralen Schulterbereiche (77a) des Films gegen die jeweiligen Anschlagflächen anstoßen, wenn der Filmendstreifenbereich von dem Schlitz aufgenommen wird,
wobei die Anschlagbereiche (80) so angeordnet sind, daß, wenn die Spule (75) in Abspulrichtung gedreht wird, eine Rotationskraft auf den fotografischen Film (5) übertragen wird, so daß die Drehung der Spule einen Filmanfang aus dem Kassettengehäuse schiebt.

7. Fotografische Filmkassette nach Anspruch 6, wobei die Verankerung (17) weiter umfaßt:
zumindest einen Verankerungsvorsprung (17), der an einer ersten Innenfläche des Schlitzes (78) gebildet ist und in ein Verankerungsloch in dem Filmendstreifenbereich eingreift; und
zumindest einen Preßvorsprung (18), der auf der zweiten Innenfläche des Schlitzes gebildet ist und zu der ersten Innenfläche vorsteht, um zu verhindern, daß der Verankerungsvorsprung und das Verankerungsloch auseinandergehen.

## Revendications

1. Cassette à film photographique dans laquelle une bobine (64, 85) avec un film photographique (6) embobiné sur celle-ci est contenue en rotation dans une coque de cassette (4), comprenant :
- une fente (68, 89) formée dans le noyau de ladite bobine (64, 85) pour s'étendre dans la direction de l'axe dudit noyau de bobine afin d'introduire la queue de film (65, 88) dudit film photographique ;
- des moyens d'ancrage (17) disposés sur une surface intérieure de ladite fente (68, 89) pour ancrer ladite queue de film (65);
caractérisée par :
des moyens de butée (70, 90) placés sur ladite surface intérieure de ladite fente pour venir buter contre un bord terminal de ladite queue de film (65, 88) ;
dans laquelle lesdits moyens de butée (70, 90) sont agencés de telle manière que lorsque ladite bobine (64) est tournée dans la direction de débobinage, une force de rotation est transmise audit film photographique (6), de sorte que la rotation de ladite bobine (64, 85) propulse l'amorce du film vers l'extérieur de ladite coque de cassette.

2. Cassette à film photographique selon la revendication 1, comprenant en outre :
- au moins un trou d'ancrage (15) formé sur ladite queue de film ;
- au moins une griffe d'ancrage (17) formée de façon à se projeter depuis ladite surface intérieure de ladite fente (68, 69) afin d'être engagée dans ledit trou d'ancrage ; et
- au moins une projection de pressage (18) formée sur ladite surface intérieure de ladite fente pour se projeter dans une direction opposée à ladite griffe d'ancrage pour empêcher audit trou d'ancrage de glisser en éloignement de ladite griffe d'ancrage.

3. Cassette à film photographique selon la revendication 2, dans laquelle :
- ladite fente (68, 89) pénètre à travers ledit noyau de bobine depuis l'entrée de fente (68a) afin de recevoir ladite queue de film (65, 88) jusqu'à la sortie de fente (68b) opposée à ladite entrée de fente ; et
- lesdits moyens de butée (70, 90) étant formés dans une position rétractée depuis ladite entrée de fente.

4. Cassette à film photographique selon la revendication 3, dans laquelle lesdits moyens de butée (70, 90) sont formés de manière à fermer une partie de ladite sortie de fente (68b).

5. Cassette à film photographique selon la revendication 3, dans laquelle lesdits moyens de butée (70, 90) sont une paire d'éléments de butée formés entre ladite entrée de fente (68a) et ladite sortie de fente (68b), et s'étendant depuis les deux extrémités latérales de ladite fente jusqu'au milieu dans le sens de la longueur de ladite fente de manière à recevoir des parties d'épaulement (65a) qui définissent des évidements formés sur ladite queue du film.

6. Cassette à film photographique, dans laquelle une bobine (75) avec un film photographique (6) enroulé sur celle-ci est contenue en rotation dans une coque de cassette (4), ladite cassette comprenant :
- un noyau de bobine (75a) dans lequel est formée une fente (78) pour recevoir une partie de queue de film (77) dudit film photographique, ladite partie de queue ayant une partie étroite qui définit deux parties d'épaulement latérales (77a) de ladite partie de queue ;
- des moyens d'ancrage (17) disposés sur une surface intérieure de ladite fente (78) pour ancrer ladite partie de queue du film (77) ;
caractérisée par :
- une paire de parties de butée (80) ayant des surfaces de butée, disposées sur ladite surface intérieure de ladite fente (78) et s'étendant depuis des bords latéraux de ladite fente afin de définir un évidement dans ladite fente, la largeur dudit évidement correspondant sensiblement à la largeur de ladite partie étroite ; et
- lesdites parties d'épaulement latérales (77a) dudit film venant buter contre des surfaces respectives parmi lesdites surfaces de butée lorsque ladite partie de queue est reçue dans ladite fente,
- dans laquelle lesdites parties de butée (80) sont agencées de telle façon que lorsque la bobine (75) est tournée dans la direction de débobinage, une force est transmise audit film photographique (5), de sorte que ladite rotation de ladite bobine propulse une amorce de film vers l'extérieur de ladite coque de cassette.

7. Cassette à film photographique selon la revendication 6, dans laquelle lesdits moyens d'ancrage (17) comprennent en outre :
- au moins une projection d'ancrage (17) formée sur une première surface intérieure de ladite fente (78) pour s'engager dans un trou d'ancrage formé dans ladite partie de queue ; et
au moins une projection de pressage (18) formée sur ladite seconde surface intérieure de ladite fente et en projection vers ladite première surface intérieure pour empêcher à ladite projection d'ancrage de se dégager du trou d'ancrage.
